Europäisches Patentamt

European Patent Office

Office européen des brevets

(19)

(11) Publication number: **0 024 104**
**B1**

(12) **EUROPEAN PATENT SPECIFICATION**

(45) Date of publication of patent specification: **23.03.83**

(21) Application number: **80302167.4**

(22) Date of filing: **27.06.80**

(51) Int. Cl.³: **C 10 G  1/00, C 10 G  49/04, B 01 J  27/04**

(54) **Process for hydrotreating a liquid coal-derived material.**

(30) Priority: **10.08.79 GB  7927994**

(43) Date of publication of application:
**25.02.81 Bulletin 81/8**

(45) Publication of the grant of the patent:
**23.03.83 Bulletin 83/12**

(84) Designated Contracting States:
**BE DE FR IT NL**

(56) References cited:
**FR - A - 745 468**
**FR - A - 2 289 237**
**FR - E - 44 441**
**GB - A - 404 422**
**NL - A - 47 362**
**US - A - 3 812 028**

(73) Proprietor: **Coal Industry (Patents) Limited**
**Hobart House Grosvenor Place**
**London SW1X 7AE (GB)**

(72) Inventor: **Gavin, Derek Gabriel**
**11 The Napping**
**Longhope Gloucestershire (GB)**
Inventor: **Jones, Michael Andrew**
**54 Darell Close**
**Quedgeley Gloucestershire (GB)**

(74) Representative: **Wood, John Irwin**
**Hobart House Grosvenor Place**
**London SW1X 7AE (GB)**

Courier Press, Leamington Spa, England.

## Process for hydrotreating a liquid coal-derived material

This invention concerns a process for hydrotreating coal-derived material such as coal extracts.

The liquefaction of coal is well established. Coal can be extracted by various solvents, especially highly aromatic liquid solvents such as coal tar fractions. This extraction can be accompanied by hydrogenation, possibly in the presence of a catalyst. Various processes for the further processing of the coal extract have been suggested with the aim of obtaining starting materials for industrial processes and fractions similar to those obtained in petroleum refining. Thus, it has been proposed to hydrocrack coal extracts, by passing them over a catalyst, under hydrogen pressure. The catalysts commonly suggested are metal sulphides of Group of Group VI B and/or Group VIII B of the Periodic Table, supported on or composited with oxide compounds such as alumina, alumina/silica or silica.

These catalysts are prepared by impregnation of the dry oxide support with aqueous solutions of salts or complexes of the metals, followed by decomposition of the metal salt or complex to the oxides, above 400°C. Catalysts of this type would consist of molybdenum or tungsten oxides with cobalt or nickel oxides supported on alumina or alumina and silica. The metal oxides are usually converted to the active form before use.

In GB—A—404,422, a catalyst is disclosed which contains heavy metals of the sixth group of the periodic system, especially molybdenum and tungsten, but also chromium and uranium or compounds thereof, or tin, vanadium, rhenium, manganese, zinc, cadmium, aluminium or cobalt or the compounds thereof may be employed with particular advantage. The catalyst is carried on active carbon which has been deashed. It is said that particularly good results are obtained by bringing the metals or metal compounds while in a colloidal state of dispersion on to the deashed active carbon. A very advantageous method for the preparation of the catalyst is to intimately contact a true solution of a compound of a metal exercising catalytic activity with an adsorbent and converting said metal compound while the solution thereof is in contact with the deashed active carbon and converting the compound into an adsorbed insoluble substance. An example is given of active carbon impregnated with 24.3% by weight of $MoS_2$. The catalyst is said to be useful for hydrogenation and destructive hydrogenation of carbonaceous materials, such as coal of all varieties, including lignite, other solid carbonaceous materials such as peat, shales and wood, mineral oils, tars and the distillation, conversion and extraction products thereof.

We have now found that a novel and advantageous hydrotreating catalyst is 0.1 to 10% molybdenum disulphide or tungsten disulphide on particles of active carbon having a surface area in excess of 800 $m^2/g$, the molybdenum or tungsten being substantially completely on the outer surface of the particles of active carbon. Such a catalyst is prepared by absorbing molybdenum or tungsten trisulphide onto particles of active carbon in which the internal pores are filled with water, and reducing the absorbed trisulphide to the disulphide. Preferably, the trisulphide is prepared by adjusting the pH of a solution containing the thiomolybdate or thiotungstate ions, until colloidal $MoS_3$ or $WS_3$ is formed. Admixing active carbon with the suspension will cause the $MoS_3$ or $WS_3$ to be absorbed on the surface of the active carbon. Reduction can be effected by hydrazine, formic acid, hydrogen gas, etc. The catalyst may be promoted with cobalt sulphide and/or nickel sulphide.

In some coal liquefaction processes, for instance those described by US patents 4,051,012; 4,049,356 and 4,045,328, coal/oil slurries or mixtures are liquified and hydrogenated using "throwaway" catalysts such as iron sulphide or quinone. These catalysts are mild hydrogenation catalysts. After liquefaction, the ash, unreacted coal and spent catalysts, are retained in the +550°C fraction by distillation. The +550°C bottoms fraction is generally coked in a delayed coker. The distillates from the coker are not amenable to further hydrocracking since they cause considerable problems in forming carbonaceous deposits on the metal oxide supported catalysts used as hydrocracking catalysts.

Proposals have been made to catalytically hydrocrack coal-derived materials by processes which on a laboratory scale do not require a coking section using more active hydrogenation catalysts in a fixed bed. Since there is no loss of coal derived material in the coker section, there is an overall increase in the yield of light distillates.

The present invention provides a process for hydrotreating liquid coal-derived materials in which no coking section is required, which process comprises passing the coal-derived material in the presence of hydrogen, at a temperature of 350 to 450°C over a catalyst which is 0.1 to 10% molybdenum disulphide or tungsten disulphide on particles of active carbon having a surface area in excess of 800 $m^2/g$ the catalyst having been prepared by filling the internal pores of the active carbon with water, contacting the treated active carbon with a suspension of molybdenum or tungsten trisulphide and reducing the adsorbed trisulphide to the disulphide. The material is converted to a product which is substantially completely distillable without loss of product by coking.

The temperature is preferably from 410 to 440°C. The hydrogen is suitably present at a pressure of from 20 to 750 bar, preferably 175 to 250 bar, especially approximately 200 bar.

The catalyst is conveniently present in a fixed bed although other reactor designs may be used.

In the process of the invention, the liquid hourly space velocity is preferably from 0.1—2.0 h⁻¹.

Pure hydrogen, or a hydrogen-containing gas which does not contain components which interfere with the derived reactions, may be used. Part of the product of the process or a fraction thereof may be recycled, and the product would normally undergo fractionation and further processing in a similar way to that well-established in petroleum refining. Part of, or a fraction of, the product may be recycled as a solvent or solvent component for the extraction of coal. Although a coking section is not required from a chemical viewpoint, one may be included for economic considerations or to achieve a desired spread of products. The coal-derived material is suitably a coal extract, that is, the product of dissolving coal in a liquid solvent and filtering off the residue and undissolved coal. The preparation of coal extracts is well known in the art. The material may be a fraction of a coal extract or a stream from an integrated coal extraction and refining plant which may already have undergone a certain amount of hydrotreating. Other materials which may be used are gas extracts of coal, in which coal substance has been extracted using a solvent in the gaseous phase and above its critical temperature, the coal substance being precipitated from the gas phase by lowering the temperature or pressure. Additionally, the material may be an oil from the pyrolysis or hydropyrolysis of coal, for example a coal tar or tar fraction, or may be a coal/oil slurry. The original coal may have been any bituminous or brown coal, but preferably is selected from medium to high volatile bituminous coals.

The process of the invention permits the obtaining of a product liquor which has been substantially hydrocracked in that the quantity of high boiling (400°C) residue is reduced and the quantity of distillates boiling below 300°C is increased. Not only is the need for a coking section avoided but also significant hydrofining (removal of sulphur and nitrogen compounds) takes place. Coking precursers are substantially eliminated. The specified catalysts maintain their activity over an extended period and are not prone to the customary problems of carbon build-up and sintering of the catalyst particles.

The following Example illustrates the invention.

Example
Catalyst 1

20 g of a granular active carbon (5—10 BS mesh—corresponding to aperture sizes of approx. 3.35 mm to 1.676 mm) derived from coconut shells was soaked in water for 30 minutes and washed free of fines. Excess water was drained away. A stock solution of sodium thiomolybdate was prepared by dissolving 7.5 g of $MoO_3$ in a solution of 18 g of sodium sulphide dihydrate in 80 ml of water. The volume of the stock solution was adjusted to 100 ml. 4 ml of the stock solution was diluted to 25 ml with water and the pH adjusted from 12 to 9.5 with dilute nitric acid. The resulting suspension was added to the carbon and left to stand for 30 minutes, after which time it was colourless indicating that all the molybdenum had been absorbed. The temperature was raised to 90°C and 0.2 ml of hydrazine hydrate solution was added to reduce the trisulphide to the disulphide. Finally, the catalyst was washed in water and dried at 105°C. This catalyst contained 1% Mo as $MoS_2$.

Catalyst 2

The preparation of catalyst 1 was repeated, but using only 2 ml of the sodium thiomolybdate stock solution, to give 0.5% molybdenum on the catalyst.

Comparative catalyst A

20 g of dry active carbon was impregnated with a solution of ammonium molybdate in an amount to give a final loading of 10% molybdenum as the oxide. The treated carbon was dried and heated with $H_2S$ and reduced in $H_2$ gas.

Comparative catalyst B

A commercial catalyst consisting of 15% molybdenum oxide, promoted with cobalt oxide, on an alumina carrier was selected as best in comparative hydrotreating tests on many commercially available catalysts of this type.

The above catalysts were tested for the hydrocracking of a coal extract solution made by dissolving crushed coal in an anthracene oil and filtering off the undissolved coal and ash. The boiling range of this solution is shown in the table below.

The catalysts were tested under identical conditions in a rocking autoclave at 450°C and 210 bar hydrogen pressure for two hours. The criteria for hydrocracking activity of the catalysts was a reduction of high boiling (above 420°C) residue and a gain in distillates boiling below 300°C as determined by distillation of the hydrocracked products. Gas production in all cases was about 2—3 wt % of the feed and hence only liquid products were compared. In the case of catalysts 1 and 2, the hydrocracked products constituting the coal oil were transparent and yellow in colour, whereas with catalysts A, B and when no catalyst is used, the products were opaque and dark brown to black in colour. The table below lists the distillation ranges of the product coal oils, showing the greater conversion activity for the $MoS_2$ on active carbon catalyst at low concentrations of $MoS_2$.

TABLE

| Distillation range (°C) | Feed | Products from tests on catalysts | | | | |
| --- | --- | --- | --- | --- | --- | --- |
| | | 1 1% $MoS_2$ on carbon | 2 0.5% $MoS_2$ on carbon | A 15% $MoO_3$ on carbon (sulphided) | B CoMo on $Al_2O_3$ 15% $MoO_3$ (sulphided) | No catalyst |
| IBP—300° | 11.1 | 35.9 | 34.9 | 32.3 | 23.6 | 15.8 |
| 300—420° | 61.2 | 57.7 | 57.2 | 54.1 | 59.3 | 59.3 |
| 420° | 27.7 | 6.4 | 5.9 | 13.6 | 17.1 | 24.9 |

## Claims

1. A process for hydrotreating a liquid coal-derived material such as coal extract by passing the material in the presence of hydrogen at temperatures of 350 to 450°C over a catalyst which comprises molybdenum disulphide or tungsten disulphide on particles of activated carbon whereby no coking section is used in the process characterised in that the catalyst comprises 0.1 to 10% $MoS_2$ or $WS_2$ on particles of active carbon having a surface area in excess of 800 m²/g, the catalyst having been prepared by filling the internal pores of the active carbon with water contacting the water-filled active carbon with a suspension of molybdenum trisulphide or tungsten trisulphide and reducing the adsorbed trisulphide to the disulphide.

2. A process according to claim 1, caracterised in that the temperature is from 410 to 440°C.

3. A process according to claim 1 or 2, characterised in that the hydrogen pressure is from 20 to 750 bar.

4. A process according to claim 3, characterised in that the hydrogen pressure is from 175 to 250 bar.

5. A process according to any of claims 1 to 4, caracterised in that the liquid hourly space velocity is from 0.1 to 2.0 h⁻¹.

## Revendications

1. Procédé de traitement par l'hydrogène d'une matière liquide provenant du charbon, comme un extrait de charbon, par passage de la matière en présence d'hydrogène à des températures de 350 à 450°C sur un catalyseur qui comprend du disulfure de molybdène ou du disulfure de tungstène sur des particules de charbon actif, de sorte que l'on n'utilise pas de section de cokéfaction dans le procédé, procédé caractérisé en ce que le catalyseur comprend 0,1 à 10% de $MoS_2$ ou de $WS_2$ sur des particules de charbon actif ayant une surface spécifique de contact supérieure à 800 m²/g, le catalyseur ayant été préparé par remplissage des pores internes du charbon actif par de l'eau, mise en contact du charbon actif, empli d'eau, avec une suspension de trisulfure de molybdène ou de trisulfure de tungstène, et réduction en disulfure du trisulfure adsorbé.

2. Procédé selon la revendication 1, caractérisé en ce que la température se situe entre 410 et 440°C.

3. Procédé selon la revendication 1 ou 2, caractérisé en ce que la pression d'hydrogène se situe entre 20 et 750 bars.

4. Procédé selon la revendication 3, caractérisé en ce que la pression d'hydrogène se situe entre 175 et 250 bars.

5. Procédé selon l'une quelconque des revendications 1 à 4, caractérisé en ce que la vitesse spatiale horaire du liquide se situe entre 0,1 et 2,0 h⁻¹.

## Patentansprüche

1. Verfahren zur Wärmebehandlung eines flüssigen, von Kohle herrührenden Materials, wie Kohleextrakt, bei dem das Material in Gegenwart von Wasserstoff bei Temperaturen von 350° bis 450°C über einen Katalysator bewegt wird, der Molybdändisulfid und Wolframdisulfid auf aktivierten Kohlenstoffteilchen umfaßt, wobei kein Verkokungsabschnitt bei dem Verfahren zum Einsatz kommt, dadurch gekennzeichnet, daß der Katalysator 0,1 bis 10% $MoS_2$ oder $WS_2$ auf aktiven Kohlenstoffteilchen, die eine spezifische Oberfläche von mehr als 800 m²/g aufweisen, umfaßt, wobei der Katalysator hergestellt wird, indem die Innenporen des aktiven Kohlenstoffs mit Wasser gefüllt werden, der wassergefüllte aktive Kohlenstoff mit einer Suspension von Molybdäntrisulfid und Wolframtrisulfid in Berührung gebracht wird und das adsorbierte Trisulfid zu dem Disulfid reduziert wird.

2. Verfahren nach Anspruch 1, dadurch gekennzeichnet, daß die Temperatur 410° bis 440°C beträgt.

3. Verfahren nach Anspruch 1 oder 3, dadurch gekennzeichnet, daß der Wasserstoffdruck 20 bis 750 bar beträgt.

4. Verfahren nach Anspruch 3, dadurch gekennzeichnet, daß der Wasserstoffdruck 175 bis 250 bar beträgt.

5. Verfahren nach einem der Ansprüche 1 bis 4, dadurch gekennzeichnet, daß die stündliche Flüssigkeitsraumgeschwindigkeit 0,1 bis 2,0 h⁻¹ beträgt.